# EUROPÄISCHE PATENTANMELDUNG

(11) **EP 1 496 328 A2**
(43) Veröffentlichungstag der Anmeldung: **12.01.2005**
(21) Anmeldenummer: 04016156.4
(22) Anmeldetag: 09.07.2004
(51) Int. Cl.: F28D 9/00, B01J 19/24, H01M 8/02, H01M 8/04, H01M 8/24

(54) **Vorrichtung mit Mitteln zur Führung von Fluiden und Verfahren zum Betreiben einer solchen Vorrichtung**

(30) Priorität: 10.07.2003 DE 10331406
(71) Anmelder: Behr GmbH & Co. KG, 70469 Stuttgart (DE)
(72) Erfinder: Damsohn, Herbert, Dr.-Ing., 73773 Aichwald (DE); Kaiser, Wolfram, Dr., 79848 Bonndorf (DE)

(57) **Zusammenfassung**

Vorrichtung (9) mit Mitteln zur Führung von Fluiden, die zumindest einen ersten Kanal (4), der mit einem ersten Fluid (7) beaufschlagbar ist, zumindest einen zweiten Kanal (1), der mit einem zweiten Fluid (5) beaufschlagbar ist, und eine dazwischenliegende, elastisch verformbare Trennwand (6,8) aufweist.

## Beschreibung

Die Erfindung betrifft eine Vorrichtung mit Mitteln zur Führung von Fluiden, insbesondere einen Wärmeübertrager, einen Reaktor oder einen Brennstoffzellenstapel, sowie ein Verfahren zum Betreiben einer solchen Vorrichtung.

Fluiddurchströmte Vorrichtungen besitzen üblicherweise Mittel zur Führung von Fluiden, deren geometrische Gestalt beim Fertigungsprozeß fixiert wird. Die Geometrie wird dabei aus strömungstechnischer Sicht derart ausgelegt, daß die Vorrichtung unter vorwiegend auftretenden Betriebsbedingungen möglichst effizient betreibbar ist. Treten Betriebsbedingungen auf, die zu einer Durchströmung abseits einer gewünschten Durchströmung beziehungsweise eines sogenannten Auslegungspunktes führen, arbeitet die Vorrichtung zwangsläufig mit einer geringeren Effizienz als im Auslegungspunkt. Wird das Gerät dynamisch beansprucht und nicht stationär im Auslegungspunkt betrieben, ist eine verringerte über die gesamte Betriebszeit gemittelte Gesamt-Effizienz die Folge.

Aufgabe der Erfindung ist es, eine verbesserte Vorrichtung darzustellen, bei der eine erhöhte Gesamt-Effizienz erzielbar ist.

Diese Aufgabe wird gelöst durch eine Vorrichtung mit Mitteln zur Führung von Fluiden mit den Merkmalen des Anspruchs 1 sowie durch ein Verfahren zum Betreiben einer solchen Vorrichtung mit den Merkmalen des Anspruchs 15.

Gemäß Anspruch 1 weist eine erfindungsgemäße Vorrichtung mit Mitteln zur Führung von Fluiden zumindest einen ersten und zumindest einen zweiten Kanal sowie eine dazwischen angeordnete Trennwand auf, wobei der erste Kanal mit einem ersten Fluid und der zweite Kanal mit einem zweiten Fluid beaufschlagbar ist. Es ist dabei prinzipiell möglich, mehrere erste und/oder mehrere zweite Kanäle für ein oder mehrere erste beziehungsweise ein oder mehrere zweite Fluide vorzusehen.

Ein Grundgedanke der Erfindung ist es, die Trennwand elastisch verformbar auszubilden, so daß eine geometrische Form und/oder Abmessungen eines zweiten Kanals, insbesondere dessen hydraulischer Durchmesser, durch eine gezielte Verformung der Trennwand einstellbar ist. Dies geschieht vorzugsweise mit Hilfe einer Steuerung eines Druckes eines ersten Fluids in einem ersten Kanal. Dadurch wird erreicht, daß die Strömungsgeometrie des zweiten Kanals durch gezielte Variation des hydraulischen Durchmessers an jeweils momentan wünschenswerte Betriebsbedingungen angepaßt werden kann. Beispielsweise ist durch eine solche Geometrieänderung bei jeweils konstanter Durchflußmenge eine Fließgeschwindigkeit eines Fluids beeinflußbar.

Eine Trennwand zwischen einem ersten und einem zweiten Kanal ist im Sinne der vorliegenden Erfindung dann als elastisch verformbar anzusehen, wenn ihre Flexibilität so groß ist, daß aufgrund einer Druckdifferenz zwischen dem ersten und dem zweiten Kanal eine reversible Verformung eintritt, die wiederum eine wesentliche Änderung der geometrischen Form und/oder Abmessungen, insbesondere des hydraulischen Durchmessers, des zweiten Kanals bewirkt. Beispielsweise eine relative Änderung des hydraulischen Durchmessers von wenigen Promille, die aufgrund einer der Trennwand innewohnenden Grundflexibilität eintritt (keine Trennwand ist unendlich starr), ist im Rahmen der Erfindung keine wesentliche Änderung.

Die Erfindung umfaßt insbesondere auch Trennwände, die eine wesentliche Änderung der geometrischen Form und/oder Abmessungen des zweiten Kanals erst nach Erreichen eines vorgebbaren Schwellwertes der Druckdifferenz bewirken. Dadurch ist insbesondere eine abgestufte Einstellung der Strömungsgeometrie des zweiten Kanals möglich.

Gemäß einer bevorzugten Ausführungsform der Erfindung ist die Flexibilität der Trennwand so hoch, daß ein Druck in dem ersten Kanal im wesentlichen in vollem Umfang auf den zweiten Kanal übertragbar ist. Dies bedeutet, daß keine wesentliche Druckdifferenz zwischen dem ersten und dem zweiten Kanal aufbaubar ist. Dadurch ist ein Druckniveau in dem zweiten Kanal direkt über ein Druckniveau innerhalb des ersten Kanals einstellbar.

Demgegenüber ist die Flexibilität der Trennwand bei einer weiteren bevorzugten Ausführungsform derart gestaltet, daß eine Druckdifferenz zwischen dem ersten und dem zweiten Kanal teilweise von der Trennwand aufnehmbar ist, so daß neben einer Verformung der Trennwand ein Druckunterschied zwischen dem ersten und dem zweiten Kanal verbleibt. Hierdurch ist eine weitgehend unabhängige Einstellung von Druck und Strömungsgeometrie des zweiten Kanals möglich.

Gemäß einer bevorzugten Ausgestaltung ist der erste Kanal von dem ersten Fluid und der zweite Kanal von dem zweiten Fluid durchströmbar. Im Gegensatz zu einer statischen Druckbeaufschlagung des ersten Kanals ist eine Verwendung eines durchströmbaren ersten Kanals beispielsweise für ein Temperier- oder Prozeßfluid möglich.

Nach einer bevorzugten Weiterbildung der Erfindung sind mehrere Trennwände mit unterschiedlicher Flexibilität vorgesehen, wobei insbesondere ein erster Kanal durch jeweils eine Trennwand von verschiedenen zweiten Kanälen getrennt ist. Somit sind verschiedene Strömungsgeometrien mehrerer zweiter Kanäle über insbesondere einen einzigen ersten Kanal einstellbar.

Gemäß einer vorteilhaften Ausgestaltung ist eine Verformung der Trennwand mit Hilfe eines Stützmittels geometrisch vorgebbar, um eine geometrische Form des zweiten Kanals während und/oder nach der Verformung der Trennwand zu kontrollieren. Besonders vorteilhaft wird als Stützmittel eine formstabile Wand eingesetzt, an die sich die elastisch verformbare Trennwand im Falle einer Verformung zumindest teilweise anlegen kann.

Gemäß einer bevorzugten Ausführung ist ein erster und/oder zweiter Kanal mit einer Flüssigkeit beaufschlagbar. Insbesondere eine Druckbeaufschlagung des ersten Kanals wird dadurch erleichtert, beispielsweise mittels eines hydraulischen Druckreglers.

Gemäß einer bevorzugten Ausgestaltung ist ein erster und/oder zweiter Kanal mit einem Gas beaufschlagbar. Aufgrund der vergleichsweise hohen Kompressibilität von Gasen ist somit beispielsweise eine gezielte Steuerung der Strömungsbedingungen in dem zweiten Kanal durch eine Änderung der Geometrie des zweiten Kanals vereinfacht.

Gemäß einer vorteilhaften Ausgestaltung weist die Vorrichtung mit Mitteln zur Führung von Fluiden einen Stapel aus mehreren Platten und/oder Folien auf, wobei zumindest eine elastisch verformbare Trennwand durch eine der Platten oder Folien gebildet ist. Neben einer einfachen Stapelbauweise werden dadurch flächige Fluidkanäle ermöglicht. Besonders vorteilhaft ist die die elastisch verformbare Trennwand bildende Platte oder Folie nur entlang ihres Umfangs mit einer oder mehreren benachbarten Platten und/oder Folien fest verbunden. Hierdurch kann beispielsweise einer thermischer oder elektrischer oder anderer Kontakt zwischen benachbarten Platten und/oder Folien über eine Druckdifferenz gesteuert werden. Darüberhinaus sind dadurch unter Umständen wesentliche Änderungen der Strömungsgeometrie des zweiten Kanals mit kleinen Druckdifferenzen erreichbar.

Bevorzugt wird eine Trennwand aus einem Metall, einem Stahl, insbesondere Edelstahl oder einer Legierung eingesetzt, deren Flexibilität durch ihre Dicke vorgebbar ist. Die Dicke der Trennwand liegt vorzugsweise zwischen 0,01 mm und 0,5 mm, besonders bevorzugt zwischen 0,1 mm und 0,25 mm.

Gemäß einer bevorzugten Ausführung ist die erfindungsgemäße Vorrichtung als Wärmeübertrager ausgebildet, wobei hier die Trennwand gleichzeitig einer Übertragung von Wärme von dem ersten auf das zweite Fluid oder umgekehrt dient.

Gemäß einer weiteren Ausführungsform ist die erfindungsgemäße Vorrichtung als Reaktor ausgebildet, wobei der Reaktor bevorzugt katalytisch beschichtet ist. Besonders bevorzugt ist die Trennwand katalytisch beschichtet. So kann auf einfache Weise eine Verweilzeit des zweiten Fluids an katalytisch aktiven Zonen und damit die Effizienz des Reaktors gezielt gesteigert werden. Dies ist besonders dann von Vorteil, wenn der Katalysator über eine begrenzte Selektivität verfügt und nur ein begrenzter Umsatz erzielt werden soll.

Gemäß einer vorteilhaften Ausgestaltung ist die erfindungsgemäße Vorrichtung als Bipolarplatte, besonders bevorzugt als Brennstoffzellenstapel ausgebildet, der aus einer oder mehreren Einzel-Brennstoffzellen besteht.

Beispielsweise eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine H⁺-Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind. Elektroden und Polymermembran (im folgenden auch teilweise als Folie bezeichnet) werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Somit besteht eine technische Brennstoff-Einzelzelle aus einer MEA, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Eine solche Bipolarplatte besteht beispielsweise aus geprägten Folien, beispielsweise Metallfolien. Fügt man zwei solcherart geprägte Metallfolien durch ein geeignetes Fügeverfahren zusammen, ergibt sich zusätzlich die Möglichkeit, zwischen den beiden Folien eine Kühlmittelverteilerstruktur zu integrieren. Ein Beispiel für eine solche Ausführung ist in der DE 100 15 360 A1 beschrieben.

Eine Bipolarplatte eines erfindungsgemäßen Brennstoffzellenstapels besteht typischerweise aus mindestens zwei Komponenten, vorzugsweise aus Blechen, die durch einen geeigneten Strukturierungsvorgang, vorzugsweise durch Umformung, mit einer Fluidverteilerstruktur versehen und in einem folgenden Fügevorgang miteinander verbunden werden. Dabei ist sind die Bleche vorzugsweise so gestaltet, daß der durch die geprägten Strukturen gebildete Zwischenraum zwischen den beiden Blechen zumindest eine Fluidverteilerstruktur bildet. Die fluiddynamischen Eigenschaften der außenliegenden Fluidverteilerstruktren der Bipolarplatte, insbesondere der hydraulische Durchmesser der Kanäle, werden im Betrieb erfindungsgemäß dadurch geändert, daß beispielsweise der Druck des Kühlmediums im durch den Zwischenraum gebildeten Kühlflowfield geändert und damit - bedingtdurch plastische oder elastische Verformungsvorgänge in den Wandungen der außenliegenden Fluidverteilerstrukturen aufgrund der Druckdifferenz zwischen den außenliegenden Fluidverteilerstrukturen und der innenliegenden Fluidverteilerstruktur - eine Änderung der fluiddynamischen Eigenschaften, insbesondere des hydraulischen Durchmessers, der Fluidverteilerkanäle erfolgt. Dabei kann es zweckmäßig sein, eine zusätzliche Platte zur mechanischen Verstärkung einzusetzen.

In einer besonders bevorzugten Ausführungsform eines erfindungsgemäßen Brennstoffzellenstapels wird eine Bipolarplatte bestehend aus mindestens zwei aufeinandergefügten Folien, beispielsweise Stahlblechfolien, dargestellt, bei der der zwischen den Folien liegende Raum für die flächige Beaufschlagung der Zelle mit Kühlflüssigkeit verwendet wird. Beschränkt sich der Fügebereich beispielsweise auf den Rand der Bipolarplatte, kann das Bauteil durch Variation des Drucks der Kühlflüssigkeit ähnlich wie ein Luftkissen "aufgeblasen" und damit die mechanische Verpressung der Stapelkomponenten aktiv beeinflusst werden. Insbesondere kann eine gleichmäßige Verpressung des Brennstoffstellenstapels erreicht werden. Durch geeignete Wahl von Fügerändern im Bereich des Flowfields ist auch die Darstellung mehrerer "aufblasbarer" Bereiche möglich. Gleichzeitig wird die Strömungsgeometrie auf der Kühlflowfieldseite geändert bzw. ein veränderter Strömungsquerschnitt bewirkt.

Ein solcher aufblasbarer Bereich kann sich im wesentlichen auf die gesamte Fläche einer Bipolarplatte erstrecken. Ebenfalls kann die Fläche der Bipolarplatte in mehrere, insbesondere jeweils aufblasbare Bereiche aufgeteilt sein. Durch eine hydraulische Aneinanderreihung mehrerer solcher Bereiche können durch Anlegen eines geeigneten Druckunterschiedes und damit verbundenes Aufblasen der Bereiche schlauchartige Kanäle ausgebildet werden, die von einem Medium durchströmbar sind.

Da für die Änderung des Drucks im Kühlflowfield nur ein Druckregelventil angesteuert werden muß, kann der erfindungsgemäße Brennstoffzellenstapel mit hoher Dynamik an den jeweiligen Betriebszustand angepaßt und ein gegenüber dem Stand der Technik deutlich verbesserter Wirkungsgrad erzielt werden.

Die Erfindung wird nachfolgend anhand von Ausführungsbeispielen unter Bezugnahme auf die Zeichnungen näher erläutert. Es zeigen:
- Fig. 1: einen ausschnittsweisen Querschnitt eines Wärmeübertragers gemäß der vorliegenden Erfindung,
- Fig. 2: einen ausschnittsweisen Querschnitt eines Wärmeübertragers gemäß der vorliegenden Erfindung,
- Fig. 3: einen ausschnittsweisen Querschnitt eines Reaktors gemäß der vorliegenden Erfindung,
- Fig. 4: einen ausschnittsweisen Querschnitt eines Reaktors gemäß der vorliegenden Erfindung,
- Fig. 5: einen ausschnittsweisen Querschnitt eines Brennstoffzellenstapels gemäß der vorliegenden Erfindung,
- Fig. 6: einen ausschnittsweisen Querschnitt eines Brennstoffzellenstapels gemäß der vorliegenden Erfindung,
- Fig. 7: eine Bipolarplatte eines Brennstoffzellenstapels gemäß der vorliegenden Erfindung,
- Fig. 8: eine Bipolarplatte eines Brennstoffzellenstapels gemäß der vorliegenden Erfindung,
- Fig. 9: eine Bipolarplatte gemäß der vorliegenden Erfindung und
- Fig. 10: eine Bipolarplatte gemäß der vorliegenden Erfindung.

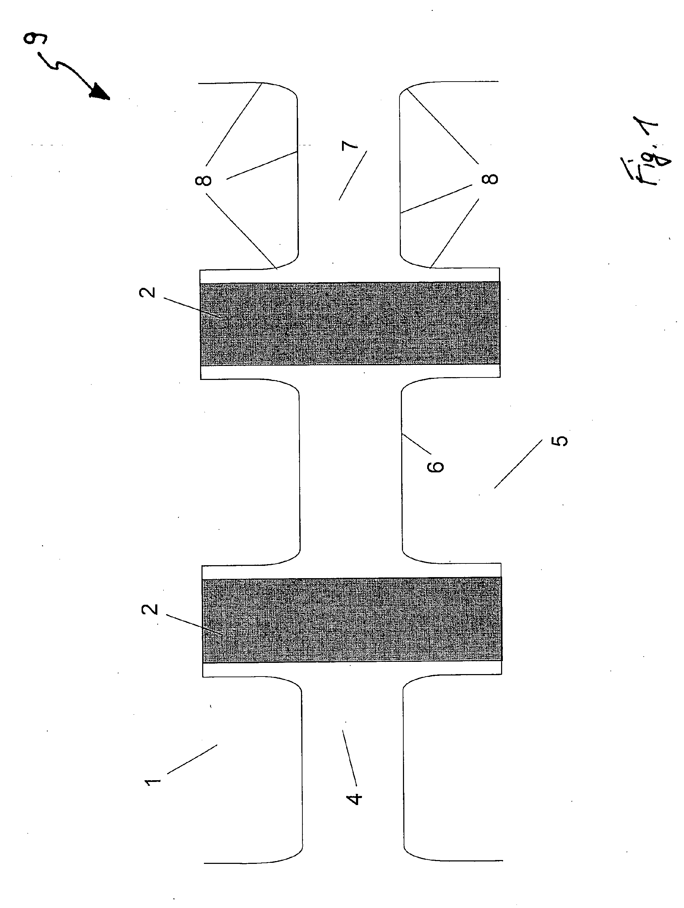

In Fig. 1 ist ein Querschnitt durch einen Wärmeübertrager 9 dargestellt. Der Wärmeübertrager 9 weist erste Kanäle 4 für eine Durchströmung mit einem Temperiermedium 7, wie beispielsweise Kühlmittel, und zweite Kanäle 1 für eine Durchströmung mit einem zu temperierenden Medium 5, wie beispielsweise einem Gas oder einer Flüssigkeit, auf. Die Strömungsrichtung weist dabei in die Zeichenebene von Fig. 1 hinein oder aus der Zeichenebene hinaus, je nachdem ob der Wärmeübertrager 9 als Gleichstrom- oder Gegenstrom-Wärmeübertrager beschaltet ist.

Geprägte Folien 6, beispielsweise aus Metall, trennen als Trennwände 8 die ersten Kanäle 4 von den zweiten Kanälen 1. Stützwände 2 dienen zunächst einer Beabstandung der Folien gegeneinander.

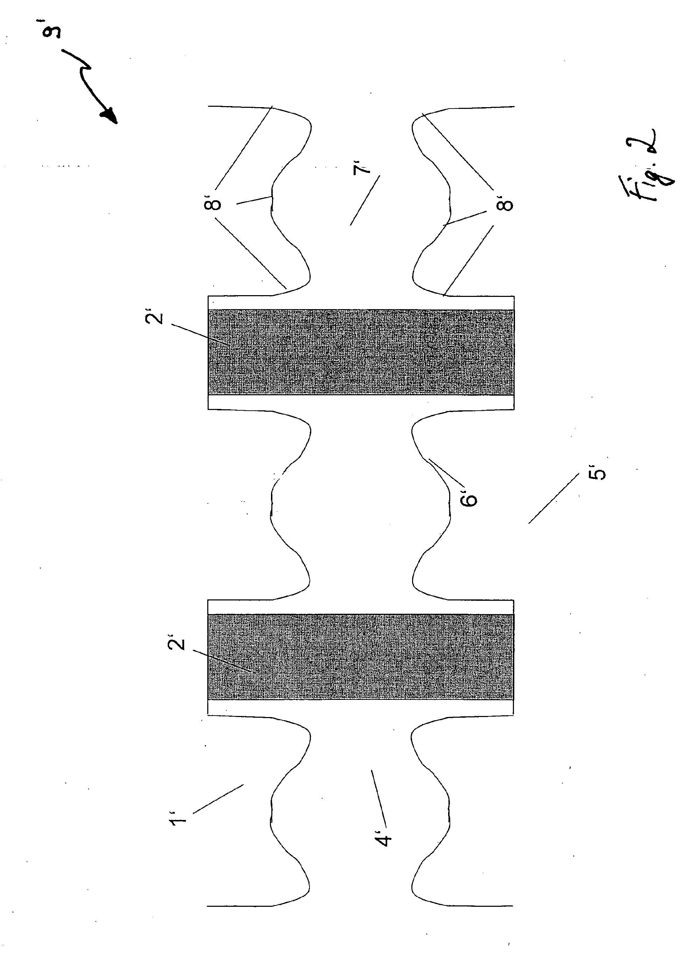

Fig. 2 zeigt den Wärmeübertrager 9' während eines Betriebes. Hier werden die ersten Kanäle 4' mit einem Temperiermedium 7' unter höherem Druck beaufschlagt als die zweiten Kanäle 1' mit einem zu temperierenden Medium 5'. Aufgrund der Druckdifferenz zwischen den ersten und den zweiten Kanälen verformen sich die durch die Folien 6' gebildeten Trennwände 8', die zu diesem zweck elastisch verformbar ausgestaltet sind, derart, daß sich die Form des Querschnitts der ersten Kanäle 4' einer Kreisform annähert. Während der Verformung legen sich die Trennwände 8' an die Stützwände an, so daß diese gewünschte Geometrie der verformten Trennwände 8' gewährleistet ist.

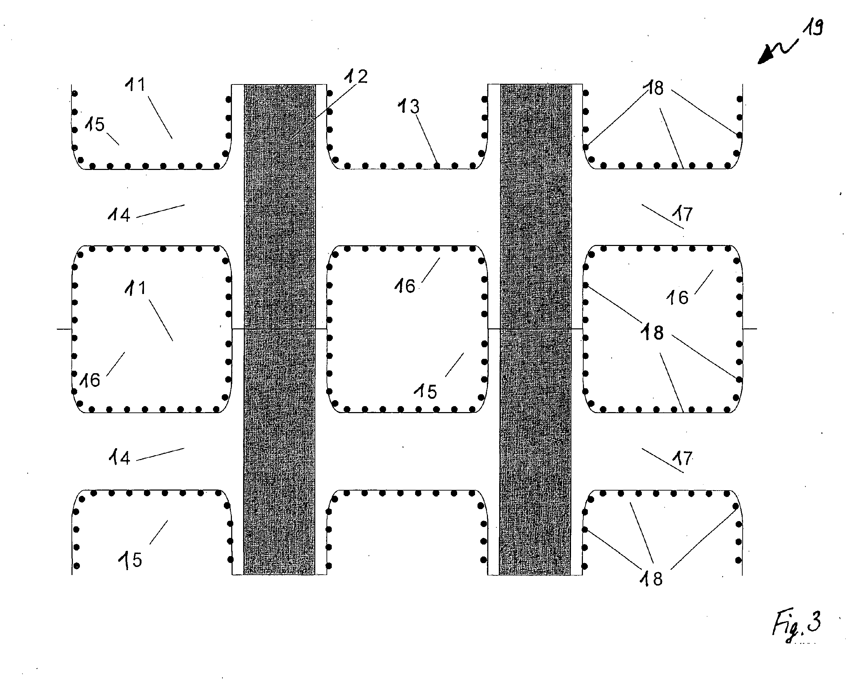

Fig. 3 zeigt einen Querschnitt durch einen ähnlich aufgebauten, katalytisch beschichteten Reaktor 19. Der Reaktor 19 besitzt von einem ersten Fluid 17 durchströmbare Kanäle 14 und dazu parallele Kanäle 11, deren Wandungen 18 mit Katalysatorpartikeln 13 beschichtet sind und die von einem zweiten Fluid 15 durchströmbar sind. Bei anderen, nicht gezeigten Ausführungsformen sind die Kanäle 14 ebenfalls mit Katalysatorpartikeln belegt beziehungsweise nur die Kanäle 14 sind katalytisch beschichtet.

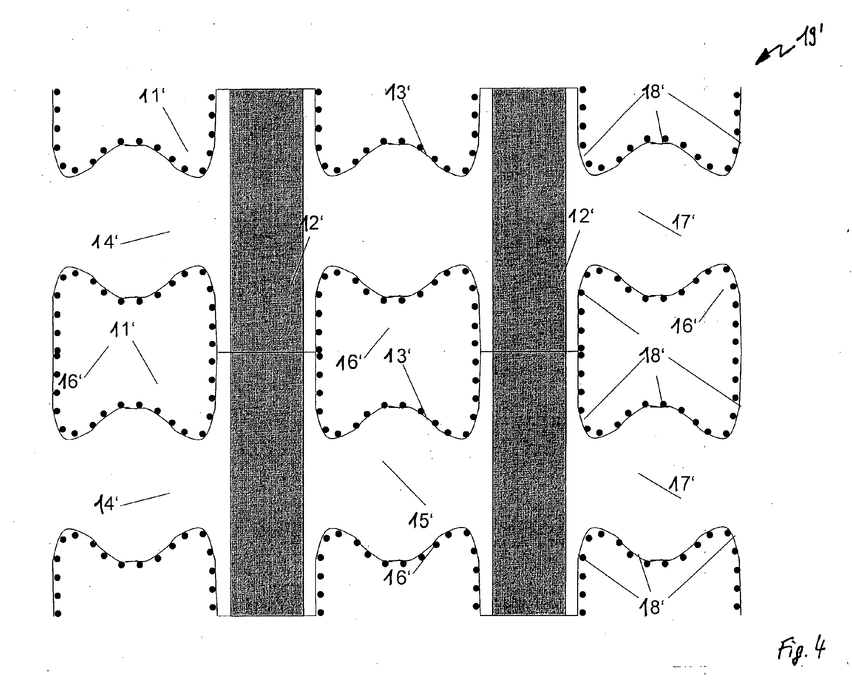

Gemäß Fig. 4 werden die Kanäle 11' durch die fluiddichten, elastisch verformbaren Trennwände 18' von den Kanälen 14' separiert. Um nun die Strömungsbedingungen, beispielsweise einen Druckverlust des Reaktors 19' in den Kanälen 11' während eines Betriebes gezielt zu verändern, wird ein Differenzdruck zwischen dem ersten Fluid 17' und dem zweiten Fluid 15' aufgeprägt, der zu einer Verformung der die jeweiligen Kanäle 11', 14' trennenden Trennwand 18' führt. Damit ist die Verweilzeit des zweiten Fluids 15' in den katalytisch aktiven Bereichen in der Nähe der Katalysatorpartikel 13' beeinflußbar und damit die über die gesamte Betriebszeit des Reaktors gemittelte Effizienz des Reaktors steigerbar.

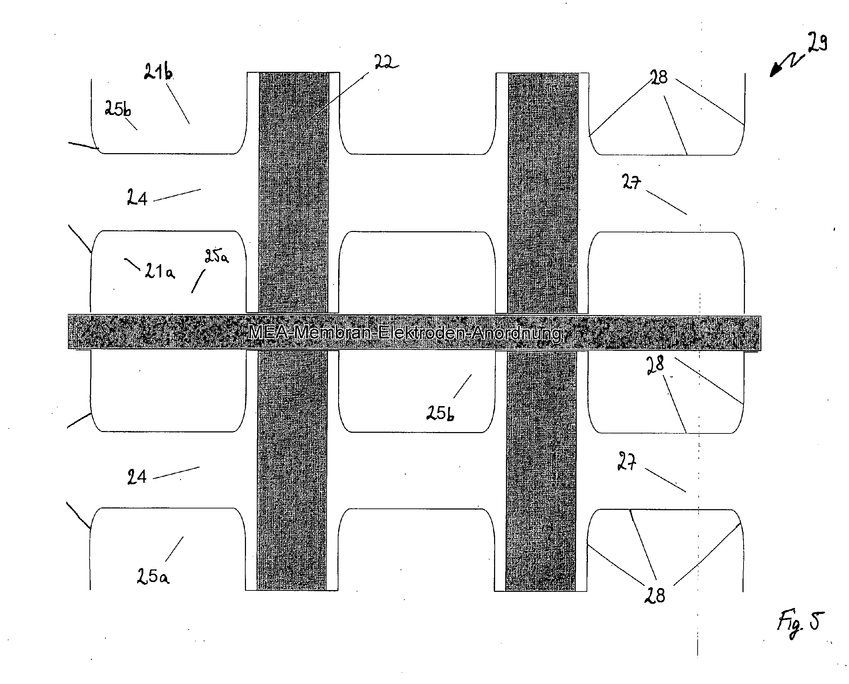

Fig. 5 zeigt in einem Querschnitt einen Ausschnitt aus einem Brennstoffzellenstapel 29, mit einer Membran-Elektroden-Anordnung (MEA) 23, einer anodenseitigen, geprägten Metallfolie 26a, einer Stützplatte 22 und einer kathodenseitigen, geprägten Metallfolie 26b, an die sich eine weitere, nicht gezeigte MEA anschließt. Die Metallfolien 26a, 26b sind derart geprägt, daß sich jeweils zwischen einer MEA 23 und einer Folie 26a Kanäle 21a für ein Anodengas 25a und zwischen einer MEA 23 und einer Folie 26b Kanäle 21b für ein Kathodengas 25b bilden.

Die Stützplatte 22 dient dabei einer Beabstandung der gestapelten Folien und/oder einer Abstützung der unter Umständen verformten Trennwände 28, die durch die Folien 26a, 26b gebildet werden. Zwischen den geprägten Metallfolien 26a, 26b bilden sich Kanäle 24 für ein Kühlmittel 27 aus, so daß überschüssige Wärme, die während eines Betriebes des Brennstoffzellenstapels 29 entsteht, konvektiv abtransportiert werden kann.

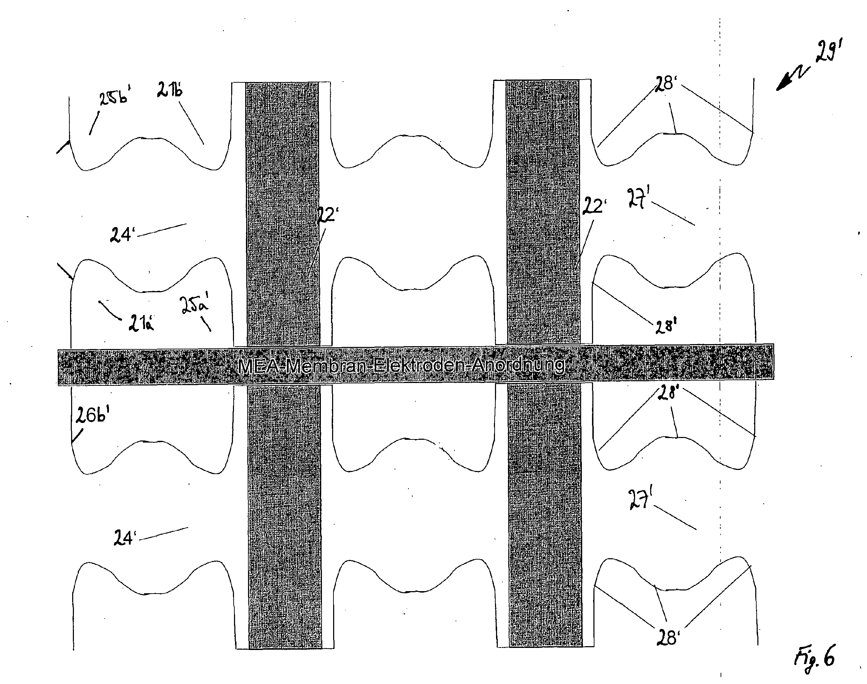

Während eines Betriebes des Brennstoffzellenstapels 29' gemäß Fig. 6 wird der hydraulische Durchmesser oder der durchströmte Querschnitt der mit dem anodenseitigen Gasstrom 25a' beziehungsweise dem kathodenseitigen Gasstrom 25b' durchströmten Kanäle 21a', 21b' durch Variation des Drukkes des Kühlmittels 27' im Kühlmittelkanal 24' und die dadurch bedingte, elastische Verformung der Trennwände 28' beeinflußt. Die Verformung der Metallfolie ist dabei unter anderem vom Differenzdruck zwischen den jeweiligen Gaskanälen 21a' beziehungsweise 21b' einerseits und den Kühlmittelkanälen 24' andererseits abhängig. Dadurch ist die Änderung der Kanalgeometrie durch einfache Ansteuerung beispielsweise eines Kühlmittel-Druckregelventils möglich.

Bei der vorliegenden Ausgestaltungsform sind die Folien 26a', 26b' mit der Stützplatte 22' fest verbunden, so daß deren Segmente bei Variation des Kühlmitteldrucks wie ein festes Lager wirken und sich durch Verformung der Trennwände 28' die gewünschte Kanalgeometrie, die in Fig. 6 gezeigt ist, einstellt.

Grundsätzlich ist - neben der Verringerung des durchströmten Querschnitts der Kanäle 21a', 21b' durch Anlegen eines Überdrucks im Kanal 24' auch eine Vergrößerung des durchströmten Querschnitts der Kanäle 21a' und/oder der Kanäle 21b' durch Anlegen eines umgekehrten Druckgefälles (höherer Druck in den Kanälen 21a', 21b') vorstellbar. Ist auf beiden Außenseiten eine unterschiedlich ausgeprägte Verformung gewünscht, kann dies durch Verwendung unterschiedlich verformbarer Metallfolien auf den jeweils unterschiedlichen Seiten der Kühlmittelkanäle 24' realisiert werden. Eine solche Verformbarkeit kann beispielsweise mittels einer geeigneten Steifigkeit des Materials und/oder einer geeigneten Foliendicke eingestellt werden.

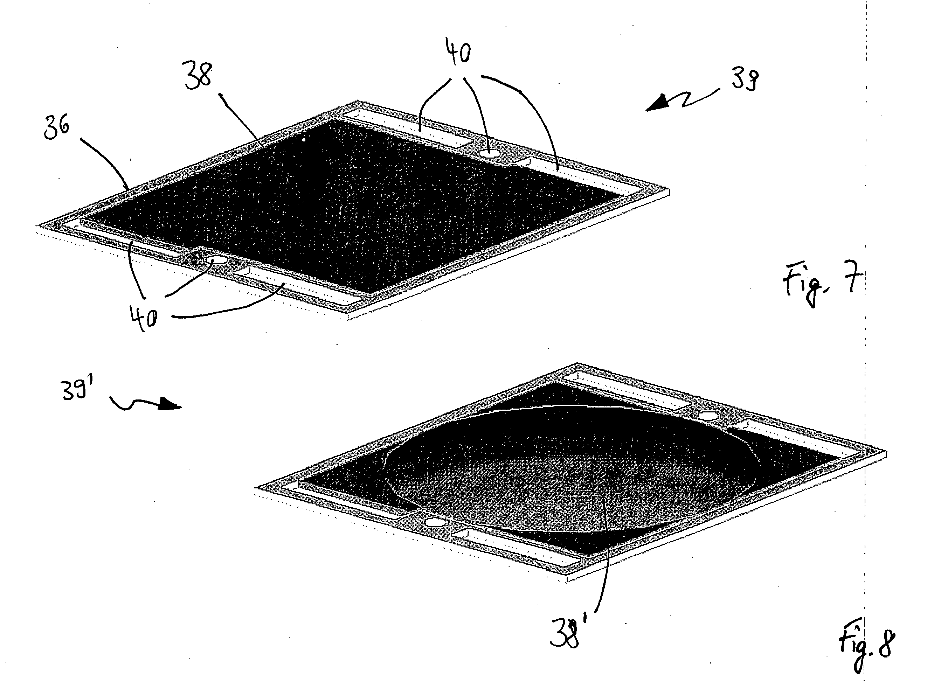

Fig. 7 zeigt eine weitere Ausführungsform einer Folie 36, die für eine Verwendung in einem Brennstoffzellenstapel 39 geeignet ist. Diese Folie 36 weist in zwei gegenüberliegenden Randbereichen Durchbrüche 40 für eine Durchleitung von Prozeß- und Temperiermedien und in einem Mittelbereich eine elastisch verformbare Trennwand 38 zur Trennung von flächigen Kanälen auf beiden Seiten der Trennwand 38 auf.

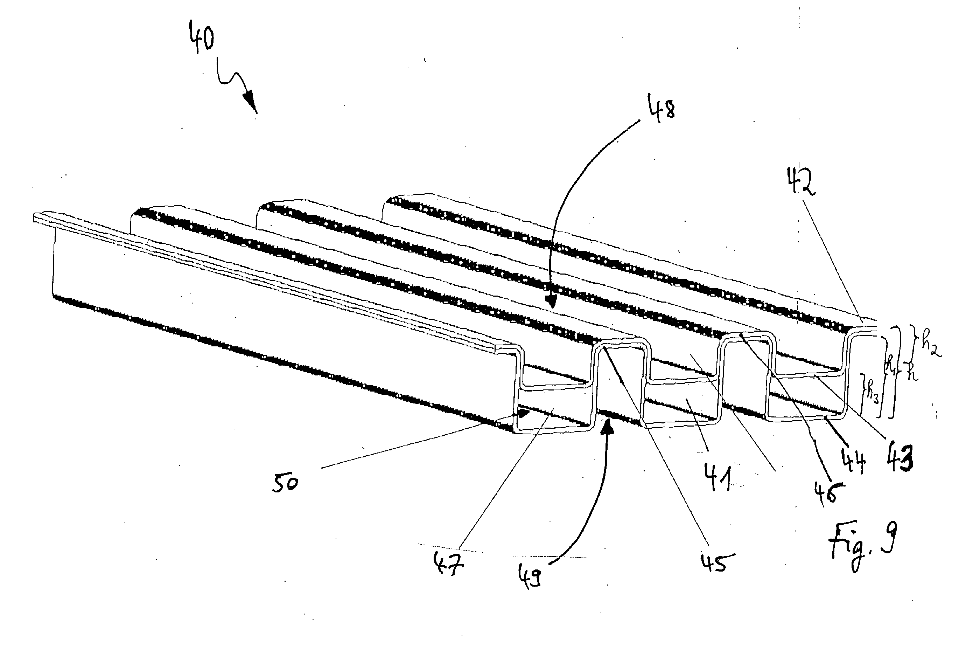

Wie in Fig. 8 zu sehen ist, findet durch eine Druckdifferenz zwischen den Kanälen beidseits der Trennwand 38' eine kissenförmige Verformung der Trennwand 38' statt. Dadurch wirkt die Trennwand 38' unter Umständen als hydraulischer Druckverteiler, der eine flächige Verpressung der Folie 36' mit einer benachbarten, nicht gezeigten Folie oder Platte bewirkt. Mit einer solchen definierten Verpressung der Folien miteinander wird ein flächiges Aneinanderliegen der Folien bei unterschiedlichen Betriebsbedingungen/temperaturen und damit eine erhöhte Betriebssicherheit und/oder Effizienz des Brennstoffzellenstapels 39' gewährleistet.

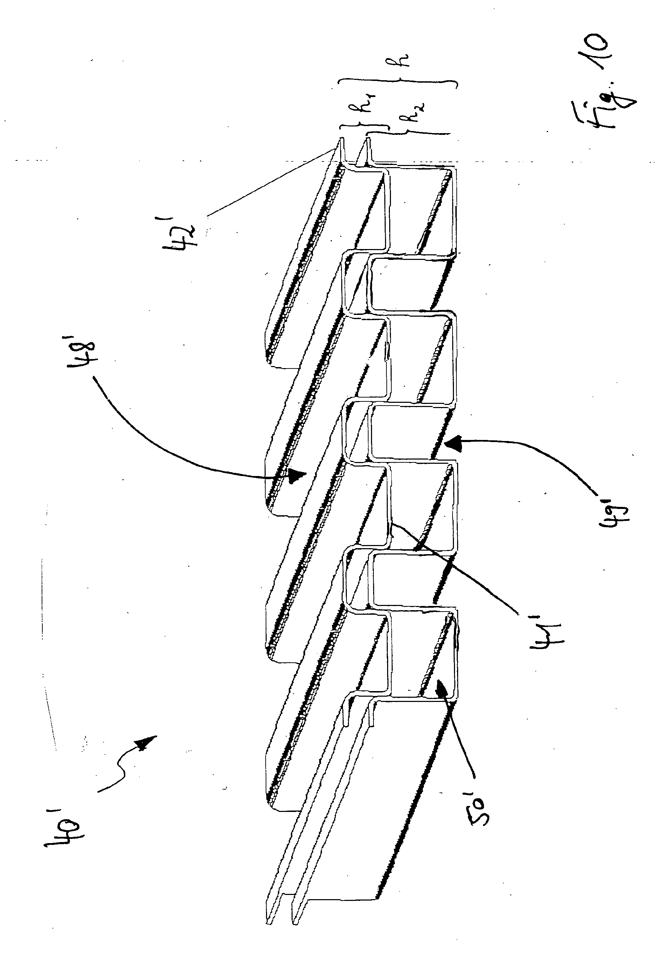

Fig. 9 zeigt eine perspektivische Darstellung eines Ausschnitts aus einer Bipolarplatte 40. Zu sehen sind zwei Platten 41 und 42, die durch ein Prägeverfahren derart umgeformt sind, daß sich beiderseits Fluidkanäle mit dazwischen liegenden Stegen ausbilden. Die Stege 43 auf der Unterseite der Platte 42 besitzen hierbei die gleiche Breite wie die Kanäle 44 auf der Oberseite der Platte 41. Ebenso besitzen die Stege 45 auf der Oberseite der Platte 41 die gleiche Breite wie die Kanäle 46 auf der Unterseite der Platte 42. Dadurch sind die beiden Platten 41 und 42 derart ineinander legbar, daß sich zwischen ihnen dritte Fluidkanäle 47 zur Beaufschlagung mit einem Kühlfluid ausbilden.

Erste Fluidkanäle 48 auf der Oberseite der Platte 42 und zweite Fluidkanäle 49 auf der Unterseite der Platte 41 dienen der Beaufschlagung nicht gezeigter Elektroden mit Prozeßgasen. Durch das Ineinanderlegen der Platten 41 und 42 ist die Gesamthöhe h der Bipolarplatte 40 bei vernachlässigter Plattendicke im wesentlichen gleich der Höhe h₁ der zweiten Fluidkanäle 49. Dadurch besitzt die Bipolarplatte 40 eine geringe Bauhöhe h, wodurch sich ein Brennstoffzellenstapel mit geringer Gesamtbauhöhe und damit hoher volumenspezifischer Leistungsdichte zusammensetzen läßt.

Sowohl die Platte 41 als auch die Platte 42 ist bei diesem Ausführungsbeispiel aus einer dünnen Metallfolie gefertigt, so daß die Trennwände zwischen den ersten Fluidkanälen 48 und den zweiten Fluidkanälen 49 beziehungsweise zwischen den Kühlfluidkanälen 50 und ersten/zweiten Fluidkanälen 48/49 elastisch verformbar ausgebildet sind. Darüberhinaus sind die Platten 41 und 42 nur entlang deren Umfangs, also außerhalb des in Fig. 9 gezeigten Bereichs, fest miteinander verbunden.

Wie in Fig. 10 dargestellt ist, entfernen sich die Platten 41' und 42' der Bipolarplatte 40' voneinander, wenn eine Druckdifferenz zwischen den Kühlfluidkanälen 50' und den ersten Fluidkanälen 48' einerseits und den zweiten Fluidkanälen 49' andererseits eingestellt wird. Dadurch werden die Querschnitte der Kühlfluidkanäle 50' vergrößert, so daß bei gleichbleibender Durchflußmengen die Strömungsgeschwindigkeit herabsetzbar beziehungsweise bei gleichbleibender Strömungsgeschwindigkeit die Durchflußmenge und damit die übertragbare Wärmeleistung erhöhbar ist. Die Gesamthöhe h der Bipolarplatte 40' ist dann größer als die Höhe h₂ der zweiten Fluidkanäle 49', aber kleiner als die Summe der Höhen h₁ der ersten Fluidkanäle 48' und h₂ der zweiten Fluidkanäle. Bei weiterer Erhöhung der Druckdifferenz zwischen den zwei Seiten der jeweiligen elastisch verformbaren Trennwände 41', 42' kann die Höhe h auch größer als h₁ + h₂ werden.

## Patentansprüche

1. Vorrichtung mit Mitteln zur Führung von Fluiden, mit zumindest einem ersten Kanal, der mit einem ersten Fluid beaufschlagbar ist, mit zumindest einem zweiten Kanal, der mit einem zweiten Fluid beaufschlagbar ist, und mit zumindest einer zwischen dem ersten und dem zweiten Kanal angeordneten Trennwand, **dadurch gekennzeichnet, daß** die Trennwand elastisch verformbar ausgebildet ist.

2. Vorrichtung nach Anspruch 1, **dadurch gekennzeichnet, daß** eine Verformung der Trennwand über den ersten Kanal von außen steuerbar ist, wobei ein Druck in dem ersten Kanal oder eine Druckdifferenz zwischen dem ersten und dem zweiten Kanal als Steuergröße dient.

3. Vorrichtung nach Anspruch 1 oder 2, **dadurch gekennzeichnet, daß** ein Druck in dem ersten Kanal im wesentlichen in vollem Umfang auf den zweiten Kanal übertragbar ist.

4. Vorrichtung nach Anspruch 1 oder 2, **dadurch gekennzeichnet, daß** eine Druckdifferenz zwischen dem ersten und dem zweiten Kanal teilweise von der Trennwand aufnehmbar ist.

5. Vorrichtung nach einem der vorhergehenden Ansprüche, **dadurch gekennzeichnet, daß** der erste Kanal von dem ersten Fluid und der zweite Kanal von dem zweiten Fluid durchströmbar ist.

6. Vorrichtung nach einem der vorhergehenden Ansprüche, **dadurch gekennzeichnet, daß** mehrere Trennwände mit unterschiedlicher Flexibilität vorgesehen sind.

7. Vorrichtung nach einem der vorhergehenden Ansprüche, **dadurch gekennzeichnet, daß** eine Verformung der Trennwand mit Hilfe eines Stützmittels, insbesondere einer Stützwand, vorgebbar ist.

8. Vorrichtung nach einem der vorhergehenden Ansprüche, **dadurch gekennzeichnet, daß** zumindest ein erster Kanal und/oder zumindest ein zweiter Kanal mit einer Flüssigkeit beaufschlagbar ist.

9. Vorrichtung nach einem der vorhergehenden Ansprüche, **dadurch gekennzeichnet, daß** zumindest ein erster Kanal und/oder zumindest ein zweiter Kanal mit einem Gas beaufschlagbar ist.

10. Vorrichtung nach einem der vorhergehenden Ansprüche, **dadurch gekennzeichnet, daß** die Vorrichtung einen Stapel aus mehreren Platten und/oder Folien aufweist, und daß eine elastisch verformbare Trennwand durch eine Platte oder Folie gebildet wird, die insbesondere nur entlang ihres Umfangs und/oder entlang der Ränder von Teilflächen mit einer oder mehreren benachbarten Platten und/oder Folien fest verbunden ist.

11. Vorrichtung nach einem der vorhergehenden Ansprüche, **dadurch gekennzeichnet, daß** die Trennwand aus einem Metall, einem Stahl, insbesondere Edelstahl, oder einer Legierung besteht.

12. Vorrichtung nach einem der vorhergehenden Ansprüche, **dadurch gekennzeichnet, daß** die Trennwand eine Dicke zwischen 0,01 mm und 0,5 mm aufweist.

13. Vorrichtung nach einem der vorhergehenden Ansprüche, **dadurch gekennzeichnet, daß** die Vorrichtung als Wärmeübertrager ausgebildet ist, wobei Wärme von dem ersten auf das zweite Medium oder umgekehrt übertragen wird.

14. Vorrichtung nach einem der vorhergehenden Ansprüche, **dadurch gekennzeichnet, daß** die Vorrichtung als Reaktor ausgebildet ist, wobei die Trennwand insbesondere mit einem Katalysatormaterial versehen ist.

15. Vorrichtung nach einem der vorhergehenden Ansprüche, **dadurch gekennzeichnet, daß** die Vorrichtung als Bipolarplatte ausgebildet ist.

16. Vorrichtung nach einem der vorhergehenden Ansprüche, **dadurch gekennzeichnet, daß** die Vorrichtung als Brennstoffzellenstapel, bestehend aus zumindest einer Einzel-Brennstoffzelle, ausgebildet ist, wobei insbesondere der erste Kanal mit einem Kühlmedium und ein oder mehrere zweite Kanäle mit einem oder mehreren Reaktionsgasen beaufschlagbar sind.

17. Verfahren zum Betreiben einer Vorrichtung zur Führung von Fluiden, **dadurch gekennzeichnet, daß** mit Hilfe einer Steuerung eines Druckes eines ersten Fluids in einem ersten Kanal die geometrische Form und/oder Abmessungen, insbesondere ein hydraulischer Durchmesser, eines zweiten Kanals für ein zweites Fluid durch Verformung einer zwischen dem ersten und dem zweiten Kanal angeordneten Trennwand eingestellt wird.
